# EUROPÄISCHE PATENTSCHRIFT

(11) **EP 1 858 784 B1**
(45) Veröffentlichungstag und Bekanntmachung des Hinweises auf die Patenterteilung: **01.07.2009**
(21) Anmeldenummer: 06722527.6
(22) Anmeldetag: 27.02.2006
(51) Int. Cl.: B65G 47/14, B65G 47/256

(54) **VERSORGUNGSEINHEIT ZUM ZUFÜHREN ODER BEREITSTELLEN VON BAUELEMENTEN SOWIE SORTIEREINHEIT FÜR DERARTIGE BAUELEMENTE**
SUPPLY UNIT FOR FEEDING OR MAKING AVAILABLE COMPONENTS, AND SORTING UNIT FOR SUCH COMPONENTS
DISPOSITIF D'ALIMENTATION DESTINE A ACHEMINER OU METTRE EN OEUVRE DES COMPOSANTS ET UNITE DE TRI DESTINEE A DE TELS COMPOSANTS

(30) Priorität: 02.03.2005 DE 202005003578 U; 08.03.2005 DE 202005003852 U; 08.03.2005 DE 202005003851 U
(43) Veröffentlichungstag der Anmeldung: 28.11.2007
(73) Patentinhaber: Schmidt, Heiko, 93138 Lappersdorf (DE)
(72) Erfinder: Schmidt, Heiko, 93138 Lappersdorf (DE)
(74) Vertreter: Graf, Helmut
(86) Internationale Anmeldenummer: PCT/DE2006/000353
(87) Internationale Veröffentlichungsnummer: WO 2006/092123

(56) Entgegenhaltungen:
- DE-A1- 2 928 974
- DE-A1- 10 332 655

## Beschreibung

Die Erfindung bezieht sich auf eine Versorgungseinheit zum Zuführen und Bereitstellen von Bauelementen, beispielsweise von Stanzmuttern oder dergleichen Verbindungselementen, z.B. an einer Verarbeitungsstation und/oder einem Verarbeitungswerkzeug, beispielsweise Stanzkopf, gemäß Oberbegriff Patentanspruch 1.

Versorgungseinheiten, insbesondere auch solche zum Versorgen von sogenannten Stanzköpfen mit Stanzmuttern oder dergleichen Verbindungselementen, die mit dem jeweiligen Stanzkopf durch Fügen und Verpressen in Bauteilen aus Blech, beispielsweise in Fahrzeugteilen aus Blech montiert werden, sind in verschiedenen Ausführungen bekannt. Bekannt ist hierbei u.a. auch, die Bauelemente in einem Stauraum einer Aufnahme, z.B. eines an der Oberseite offenen Bunkers als ungeordnete Menge bzw. Vorrat bereitzustellen, aus welchem die Bauelemente dann entnommen, z.B. unter Verwendung eines Entnahmeelementes in Form eines Stufenförderers oder aber durch Ausbildung des Bunkers als Schwingtopf, und nach Sortierung in einer vorgegebenen Orientierung der weiteren Verwendung zugeführt werden.

Bekannt ist auch eine Versorgungseinheit in Form eines Stufenförderers (DE 103 32 655 A1) im Wesentlichen bestehend aus einem Bunker und aus einer Entnahmeeinheit, die von mehreren auf- und abbewegbaren Elementen gebildet ist, mit denen Bauteile, beispielsweise in Form von Bolzen oder Federn aus dem Bunker entnommen und über die mehrteilige Entnahmeeinheit an einen Kanal zur Weiterleitung der Bauelemente gefördert werden.

Bekannt ist weiterhin eine Vorrichtung zum Zuführen von Kronenverschlüssen an Verschlussorgane einer Verschließmaschine (DE 29 28 974) im Wesentlichen bestehend aus einer Sortierscheibe, der die Kronenverschlüsse vereinzelt zugeführt werden, sowie aus an die Sortierscheibe anschließenden Kanälen zur Weiterleitung der Verschlüsse an das jeweilige Verschließorgan. Über einen Kanal gelangen die eine vorgegebene Orientierung bereits aufweisenden Verschlüsse direkt an das Verschließorgan. Über den anderen Kanal gelangen solche Verschlüsse, die die vorgegebene Orientierung ursprünglich nicht aufweisen, in einer Wendeeinrichtung dieses Kanals gewendet an das Verschließorgan.

Aufgabe der Erfindung ist es, eine Versorgungseinheit aufzuzeigen, die bei vereinfachter Konstruktion gegenüber herkömmlichen Versorgungseinheiten eine verbesserte Förderleistung aufweist. Zur Lösung dieser Aufgabe ist eine Versorgungseinheit entsprechend dem Patentanspruch 1 ausgebildet.

Unter "Förderleistung" ist im Sinne der Erfindung die Anzahl der je Zeiteinheit für die weitere Verwendung, beilspielsweise für ein Verarbeitungswerkzeug bereitgestellten Bauelemente zu verstehen.

Bei der erfindungsgemäßen Versorgungseinheit gelangen die Bauelemente über den im unteren Bereich des Stauraumes vorgesehenen Einlass in die Entnahmeeinheit bzw. in den wenigstens einen Kanal dieser Entnahmeeinheit. Der Einlass bzw. dessen Querschnitt sind an die Kontur und/oder Außenabmessungen der Bauelemente derart angepasst, dass nur solche Bauelemente, die am Einlass in der ungeordneten Menge rein zufällig eine einzige, durch den Einlass vorgegebene Orientierung aufweisen oder aber dort eine erste oder zweite von zwei möglichen Orientierungen besitzen, über den Einlass in den wenigstens einen Kanal der Entnahmeeinheit gelangen können.

Um das Eintreten der Bauelemente über den Einlass in die Entnahmeeinheit zu ermöglichen, sind Mittel vorgesehen, die die im Stauraum des Bunkers vorhandenen Bauelemente zumindest in der Umgebung des Einlasses in Bewegung zu bringen. Dies kann auf unterschiedlichste Weise realisiert sein, und zwar z.B. durch eine entsprechende Bewegung der Entnahmeeinheit selbst, insbesondere auch relativ zum Bunker bzw. der Bauelementaufnahme, und/oder durch eine Bewegung der Bauelementaufnahme bzw. des Bunkers, insbesondere auch relativ zu der Entnahmeeinheit, und/oder durch mechanische, die Bauelemente im Stauraum bewegende Mittel, wie z.B. Greif- oder Rührarme, und/oder durch pneumatisches Bewegen der Bauelemente, z.B. durch einen aus wenigstens einer Düse austretenden Druckluftstrahl usw. Auch Kombinationen einer oder mehrerer der vorgenannten Maßnahmen sind denkbar.

Bei einer bevorzugten Ausführungsform sind die Entnahmeeinheit bzw. deren Einlass so ausgebildet, dass durch die Entnahmeeinheit eine Vorsortierung der Bauelemente in der Weise erfolgt, dass die von der Entnahmeeinheit aufgenommenen Bauelemente nur jeweils vorgegebene Orientierungen aufweisen und dass anschließend eine weitere Sortierung der Bauelemente in Bezug auf ihre Orientierung erfolgt, und zwar derart, dass die für die Weiterverarbeitung bereitgestellten Bauelemente schließlich ein und dieselbe Orientierung besitzen. Diese weitere Sortierung mit anschließenden Wenden und/oder Ausrichten der Bauelemente erfolgt z.B. rein mechanisch, pneumatisch, elektrisch, opto-elektrisch usw.

Bei einer bevorzugten Ausführungsform der Erfindung erfolgt die weitere Sortierung bzw. Nachsortierung ausschließlich rein mechanisch in wenigstens einem Sortierkanal dadurch, dass die Bauelemente aufgrund ihrer Außenkontur und deren Orientierung durch eine entsprechende Querschnittsausbildung des sich verzweigenden Sortierkanals an jeweils einen ihrer tatsächlichen Orientierung zugeordneten Auslass der Sortiereinheit bewegt bzw. gefördert werden.

Bei einer weiteren möglichen Ausführungsform der erfindungsgemäßen Versorgungseinheit ist der Einlass der Entnahmeeinheit so ausgebildet, dass bereits dort eine hundertprozentige Sortierung der Bauelemente erfolgt, d.h. die von der Entnahmeeinheit entnommenen Bauelemente jeweils die einzige, gewünschte Orientierung aufweisen. Dies ist beispielsweise dadurch erreicht, dass die wenigstens eine Öffnung des Einlasses als eine an die Außenkontur der Bauelemente angepasste Maske ausgebildet ist.

Bei der erfindungsgemäßen Sortiereinheit erfolgt das Sortieren der Bauteile hinsichtlich ihrer Orientierung, d.h. an verschiedenen Ausgängen der Sortiereinheit werden jeweils Bauelemente einer Orientierung bereitgestellt, wobei als Kriterium für diese Sortierung die Außenkontur der Bauelemente verwendet wird. Dem Sortierkanal werden die Bauelemente in einer oder mehreren zulässigen Orientierungen zugeführt, beispielsweise in einer ersten oder zweiten von zwei zulässigen Orientierungen. Der den Einlass der Sortiereinheit bildende erste Kanalabschnitt des Sortierkanals ist dann so ausgebildet, dass dessen Querschnitt passend für Bauelemente in sämtlichen zulässigen Orientierungen ist. An wenigstens einem Verzweigungsbereich verzweigt sich der Sortierkanal in wenigstens zwei weitere Kanalabschnitte, von denen jeder bezüglich seines Querschnittes an die Außenkontur der Bauelemente so angepasst ist, dass in jeden weiteren Kanalabschnitten nur Bauelemente gelangen, die die dem betreffenden Kanalabschnitt zugeordnete Orientierung aufweisen, die dann wiederum wenigstens eine der zulässigen Orientierungen ist, sodass an dem wenigstens einen Verzweigungspunkt die Bauelemente unterschiedlicher Orientierung jeweils in unterschiedliche weitere Kanalabschnitte geleitet werden. Bei einer Ausführung der Erfindung bilden diese weiteren verzweigten Kanalabschnitte die Auslässe der Sortiereinheit. Grundsätzlich besteht aber auch die Möglichkeit, dass in wenigstens einem auf einen ersten Verzweigungsbereich folgenden verzweigten Kanalabschnitt ein weiterer Verzweigungsbreich mit weiteren verzweigten Kanalabschnitten folgt, so dass die Sortierung dann stufenförmig mit einstufiger oder mehrstufiger Vorsortierung und Endsortierung durchgeführt wird.

Weiterbildungen der Erfindung sind Gegenstand der Unteransprüche. Die Erfindung wird im Folgenden anhand der Figuren, in denen zum besseren Verständnis die drei rechtwinklig zu einender orientierten Raumachsen X, Y und Z wiedergegeben sind, an Ausführungsbeispielen näher erläutert. Es zeigen:
- Fig. 1: in Positionen a bzw. b ein Bau- oder Verbindungselement in Form einer sogenannten Stanzmutter in zwei unterschiedlichen Ansichten;
- Fig. 2: in vereinfachter Darstellung eine Versorgungseinrichtung zum Zuführen von Stanzmuttern an ein nicht dargestelltes, diese Muttern verarbeitendes Werkzeug (z.B. Stanzkopf);
- Fig. 3: in vereinfachter Darstellung einen Teilschnitt durch ein Entnahmeelement zum Entnehmen der Stanzmuttern aus einem Stanzmuttervorrat;
- Fig. 4 und 5: Schnitte durch die Sortiereinheit der Versorgungseinrichtung der Figur 2;
- Fig. 6: in einer Darstellung ähnlich Figur 2 eine weitere mögliche Ausführungsform;

In den Figuren sind 1 sogenannte Stanzmuttern, die in Werkstücken 2 aus Blech durch Fügen und Verpressen montierbar sind. Jede Stanzmutter 1 besteht in bekannter Weise aus einem kreiszylinderförmigen Mutterkörper 3 mit Gewindebohrung 4. An einer Stirnseite ist der Mutterkörper 3 mit einem für die Verankerung im Werkstück dienenden, achsgleich mit der Stanzmutterachse angeordneten, im wesentlichen kreiszylinderförmigen Vorsprung 5 versehen.

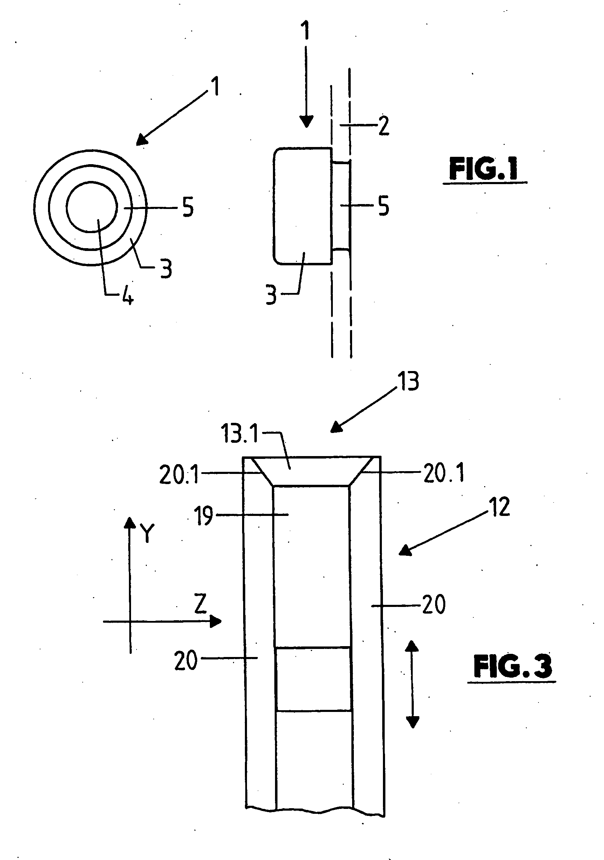

Zum Zuführen der Stanzmuttern 1 an nicht dargestellte, dem Fachmann aber bekannte Werkzeuge, beispielsweise Stanzköpfe dient die in den Figuren 1 - 6 allgemein mit 10 bezeichnete Versorgungseinheit, die an einem nicht dargestellten Rahmen oder Maschinengestell einen an der Oberseite offenen Bunker 11 zur Aufnahme eines Vorrats an Stanzmuttern in Form einer ungeordneten.Menge aufweist.

Am Bunker 11 ist ein Entnahmeelement bzw. eine Entnahmeeinheit 12 vorgesehen, mit der aus dem Vorrat im Bunker 11 jeweils solche Stanzmuttern 1 entnommen werden, die sich am Einlass 13 bzw. der dortigen Öffnung 13.1 der Entnahmeeinrichtung 12 befinden und dort zufällig eine erste oder zweite Orientierung von zwei möglichen Orientierungen aufweisen. An die Entnahmeeinheit 12 schließt sich eine Sortiereinheit 14 an, über die solche Stanzmuttern 1, die bereits die gewünschte erste Orientierung aufweisen unmittelbar in ein Magazin 15 gelangen, während solche Stanzmuttern 1, die die zweite, von den beiden möglichen Orientierungen aufweisen, in einer Wendeeinrichtung 16 gewendet diesem Magazin zugeführt werden. Über einen Auslasskanal 17 werden die Stanzmuttern 1 denn über Versorgungsschläuche und unter Beibehaltung der ersten Orientierung an die verschiedenen Bearbeitungswerkzeuge (Stanzköpfe) weitergeleitet, beilspielsweise durch Förder- oder Blasluft.

Das mit seinem von der schlitzförmige Öffnung 13.1 gebildeten Einlass von unten her in den Stau- oder innenraum des Bunkers bzw. in die dortige ungeordnete Menge an Stanzmuttern 1 hineinreichende Entnahmeelement 12 bildet einen im Querschnitt rechteckförmigen Schacht 19, der Teil des Einlasses ist und sich zum Rand Öffnung 13.1 etwas erweitert, und zwar an dem Randbereich 20.1 der Wandung des Schachtes 19. Der Querschnitt des Schachtes 19 senkrecht zu den beiden Wänden 20, die in der XY-Ebene angeordnet sind, ist gleich oder geringfügig größer als die axiale Länge der Stanzmuttern 1, so dass jede Stanzmutter 1, die über den Einlass 13 in den Schacht 19 gelangt, nur jeweils eine erste oder eine zweite von zwei möglichen Orientierungen aufweisen kann, d.h. beispielsweise bei der für die Figur 3 gewählten Darstellung entweder mit ihrem jeweiligen Vorsprung 5 der dortigen linken oder aber dortigen rechten Wand 20 benachbart liegt, auf jeden Fall aber mit ihrer Achse in der Z-Achse angeordnet ist.

Der Schacht 19 mündet über sich jeweils trichterartig verjüngende Schachtabschnitte 19.1 bzw. 19.2 in jeweils einen sich in vertikaler Richtung (Y-Achse) nach unten erstreckenden Kanal 21. Diese Kanäle 21, die ebenso wie der Schacht 19 in dem Gehäuse der Entnahmeeinheit gebildet sind, besitzen in der X-Achse eine Breite, gleich dem Durchmesser oder etwas größer als der Durchmesser der Stanzmuttern 1 bzw. des Mutterkörpers 3, so dass in den Kanälen 21 die Stanzmuttern 1 vertikal in Reihe nacheinander, aber weiterhin in der ersten oder zweiten Orientierung angeordnet sind.

Durch einen nicht dargestellten Antrieb ist bei der dargestellten Ausführungsform die Entnahmeeinheit 12 in vertikaler Richtung, d.h. in Richtung der Y-Achse auf- und abbewegbar, so dass hierdurch eine Bewegung des Stanzmuttervorrats zumindest auch in der Umgebung des Einlasses 13 zum Schacht 19 erfolgt und dadurch ständig Stanzmuttern 1 in den Schacht 19 und von dort in die Kanäle 21 gelangen.

Über die Kanäle 21 werden die Stanzmuttern 1 jeweils einem Sortierkanal 22 der Sortiereinheit 14 zugeführt, und zwar über eine Verbindung 23 zwischen der Entnahmeeinheit 12 und der Sortiereinheit 14, die (Verbindung 23) bei fest am Vorrichtungsgestellt vorgesehener Sortiereinheit 14 die vertikale Auf- und Abbewegung der Entnahmeeinheit 12 (Doppelpfeil A) zu ermöglicht.

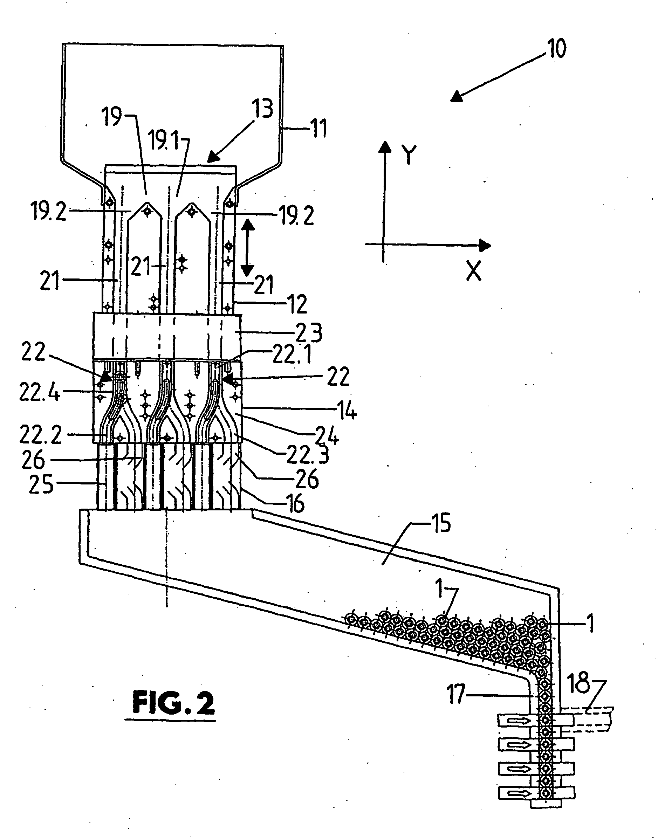

Entsprechend der Anzahl der Kanäle 21 sind auch in der Sortiereinheit bzw_{.} in dem Gehäuse 24 dieser Einheit insgesamt drei Sortierkanäle 22 vorgesehen. Jeder Sortierkanal 22 besitzt drei Kanalabschnitte 22.1 - 22.3, und zwar den an die Verbindung 23 bzw. an den vorausgehenden Kanal 21 anschließenden Kanalabschnitt 22.1 und die beiden sich verzweigenden Kanalabschnitte 22.2 und 22.3, von denen jeweils der Kanalabschnitt 22.2 über einen durchgehenden, d.h. nicht wendenden Kanal 25 direkt in das Magazin 15 mündet, d.h. über die Kanäle 25 werden diejenigen Stanzmuttern 1 direkt in das Magazin 15 geleitet, die die für die Weiterverarbeitung notwendige Orientierung aufweisen, d.h. bei der für die Figur 2 gewählten Darstellung mit ihrer Mutterachse senkrecht zur XY-Ebene orientiert sind und ihren Vorsprung an der in der Figur 2 sichtbaren Seite aufweisen. Jeder Kanalabschnitt 22.3 mündet über einen wendelförmigen Wendekanal 26 in das Magazin 15, d.h. über den Kanalabschnitt 22.3 und den Wendekanal 26 gelangen solche Stanzmuttern 1, die die zweite von den beiden möglichen Orientierungen im Kanalabschnitt 22.3 aufwiesen, gewendet, d.h. dann ebenfalls in der richtigen ersten Orientierung in das Magazin 15.

Der Kanal 22 besitzt insgesamt, d.h. an seinen sämtlichen Kanalabschnitten 22.1 - 22.3 sowie auch an einem Verzweigungsbereich 22.4, an dem die beiden Kanalabschnitt 22.2 und 22.3 auseinanderlaufen bzw. sich verzweigen, jeweils den selben rechteckförmigen Querschnitt, der geringfügig größer ist als die axiale Höhe und der Durchmesser des zylinderförmigen Stanzmutterkörpers 3 ohne den Vorsprung 5. Am Kanalabschnitt 22.1 bis hin zum Verzweigungsbereich 22.4 weist der rechteckförmige Querschnitt des Kanals 22 weiterhin an beiden größeren Querschnittsseiten jeweils eine nutenförmige Erweiterung 27 sowie 28 auf, die den Bewegungsraum für die Vorsprünge 5 der Stanzmuttern 1 schafft, und zwar unabhängig von der Orientierung der jeweiligen Stanzmuttern 1 bzw. des jeweiligen Vorsprunges 5.

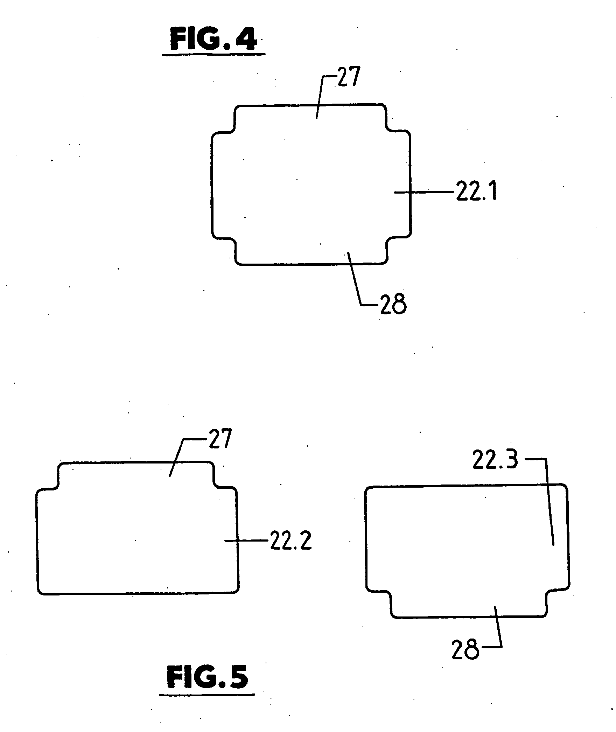

Die nutenförmige Erweiterung 27 setzt sich über den Verzweigungsbereich 22.4 hinaus innerhalb des Kanalabschnittes 22.2 fort, so dass der Kanal 22 dort entsprechend der Figur 5 den rechteckförmigen Querschnitt mit nur einer Erweiterung, nämlich der Erweiterung 27 man der einen, d.h. bei der für die Figur 5 gewählten Darstellung an der oberen größeren Querschnittsseite aufweist. Hierdurch werden in den Kanalabschnilt 22.2 auch nur solche Stanzmuttern 1 geleitet, die so orientiert sind, dass deren Vorsprünge in der Erweiterung 27 aufgenommen sind. In analoger Weise setzt sich die Erweiterung 28 über den Verzweigungsbereich 22.4 in den Kanalabschnitt 22.3 fort, so dass der rechteckförmige Querschnitt auch dieses Kanalabschnitts nur eine Erweiterung, nämlich die Erweiterung 28, aber an der anderen größeren Querschnittsseite, d.h. bei der für die Figur 5 gewählten Darstellung an der unteren Querschnittsseite aufweist. Nur solche Stanzmuttern 1, die in Bezug auf ihren Vorsprung 5 entsprechend orientiert sind, d.h. deren Vorsprünge in der Erweiterung 28 des Kanals 22 aufgenommen sind, werden an ihrem Vorsprung in den Kanalabschnitt 22.3 geleitet und dort mit ihrem Vorsprung in der Erweiterung 28 gleitend weitergefördert, d.h. dem Wendekanal 26 zugeführt.

Das Sortieren der Stanzmuttern 1 erfolgt somit mit der Sortiereinheit 14 allein durch die Formgebung der Sortierkanäle 22 und ohne die Verwendung von aktiven oder angetriebenen Sortierelementen usw. Das Fördern der Stanzmuttern in der Sortiereinheit 14 erfolgt bei der dargestellten Ausführungsform durch Schwerkraft. Es sind aber auch andere Ausführungen möglich, insbesondere auch solche, bei denen das Fördern der Stanzmuttern 1 in der Sortiereinheit 14 beispielsweise durch Blasluft erfolgt.

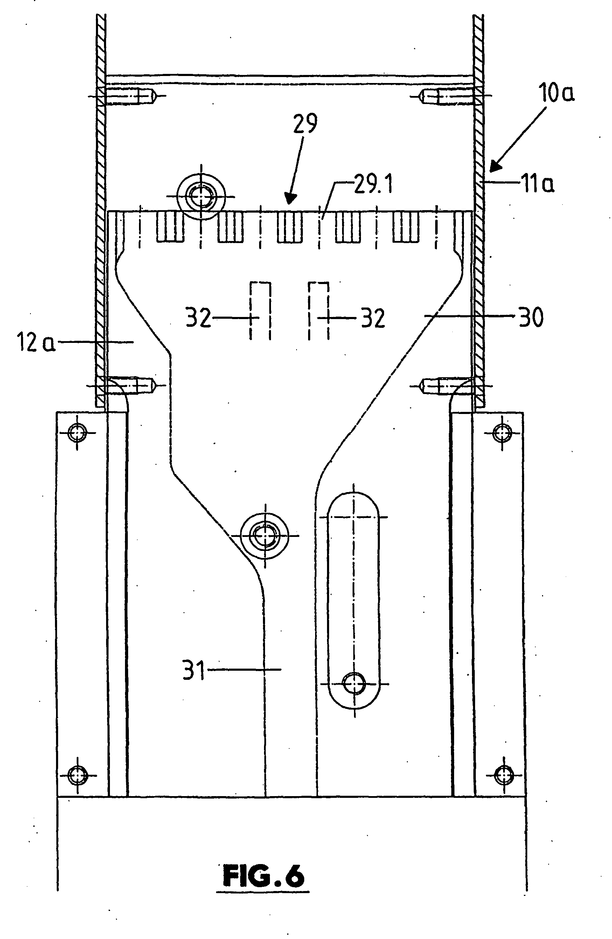

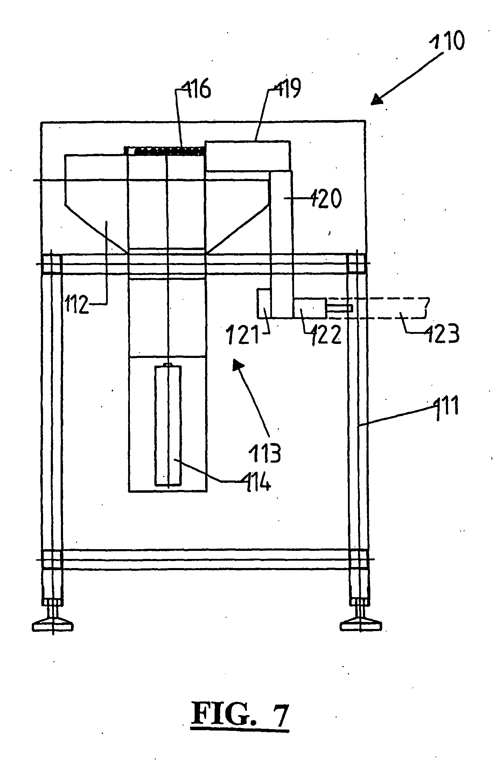

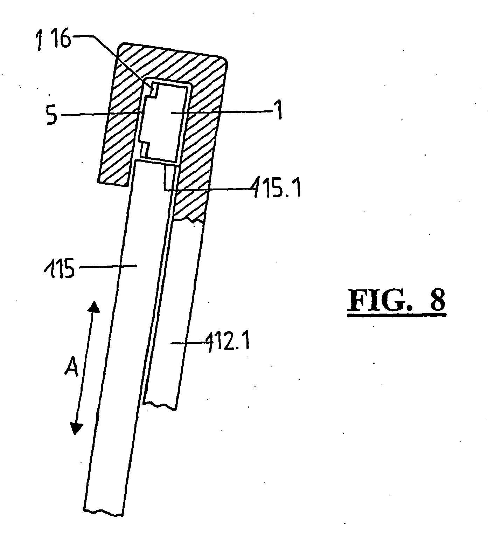

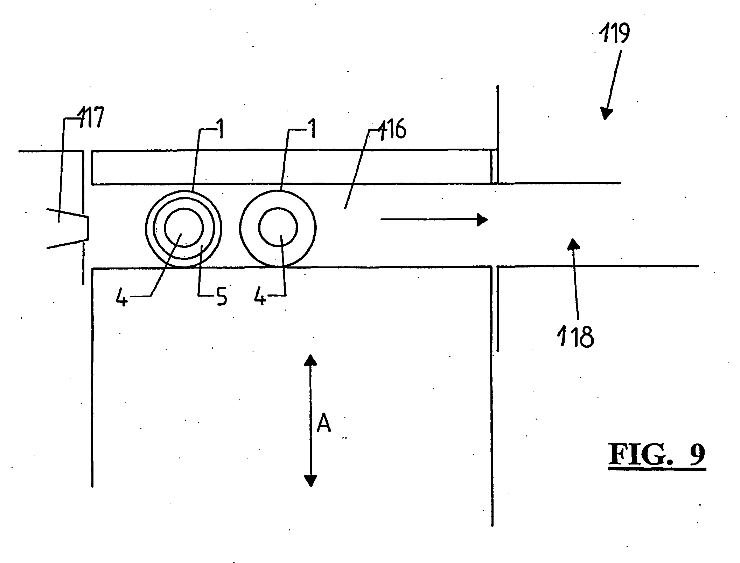

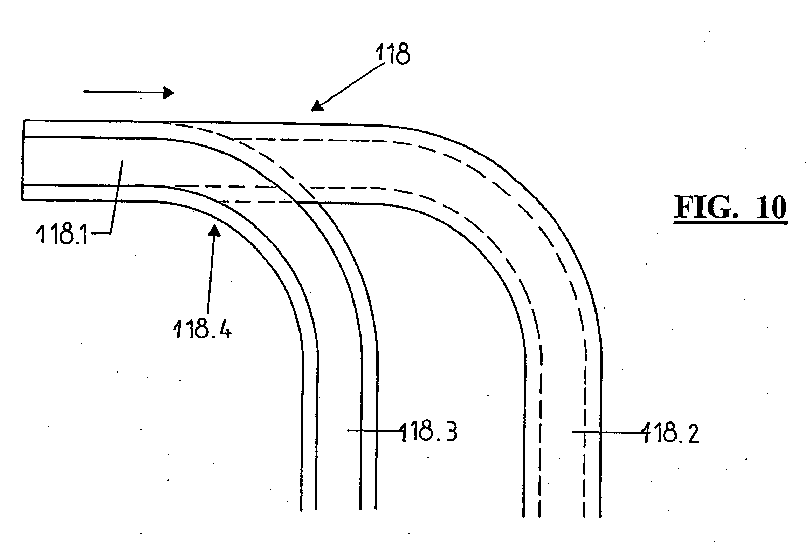

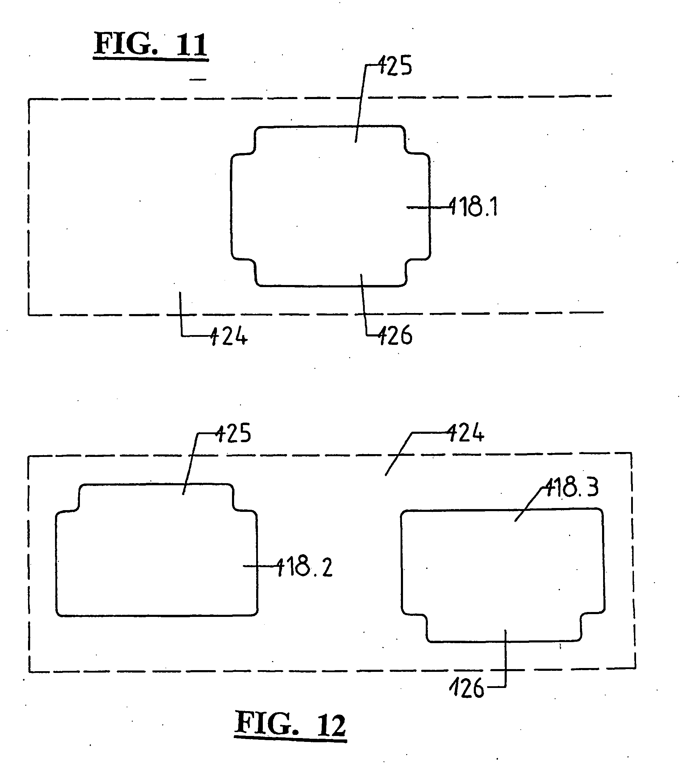

Die Figur 6 zeigt als weitere mögliche Ausführungsform eine Versorgungseinheit 10a, die sich von der Versorgungseinheit 10 u.a. dadurch unterscheidet, dass der Einlass 29 der dortigen Entnahmeeinheit 12a von einer Vielzahl von Öffnungen 29.1 gebildet ist, deren Querschnitt so gewählt ist, dass nur solche Stanzmuttern 1, die im Bereich einer der Öffnungen 29 die erforderliche erste Orientierung aufweisen, d.h. nicht nur mit ihrer Mutterachse senkrecht zur Zeichenebene der Figur 6, d.h. senkrecht zur XY-Ebene orientiert sind, sondern deren Vorsprünge 5 sich auch an der bei der Darstellung der Figur 6 sichtbaren Vorderseite befinden, in die Entnahrneeinhcit 12a bzw. deren Schacht 30 gelangen, während die Stanzmuttern 1, die diese Orientierung nicht aufweiten, nicht in den Schacht 30 und aus diesem auch nicht in den vertikalen Kanal 31 gelangen können. Die Querschnitte des Schachtes 30 und des Kanals 31 sind so gewählt, dass die Stanzmuttern 1 ihre Orientierung erzwungenermaßen beibehalten, so dass die Stanzmuttern 1 über den Kanal 31 ohne die Notwendigkeit einer Sortiereinheit direkt in das Magazin 15 oder einer anderen Einheit zugeführt werden können.

Um ein Versperren der Öffnungen 29, durch in diesen Öffnungen zurückgehaltene, falsch orientierte Stanzmuttern 1 zu vermeiden, ist bei dieser Ausführung ein die Öffnungen 29 periodisch freihaltendes und den Stanzmutternvorrat über den Masken oder Öffnungen 29 auflockerndes Freihalte- und Auflockerungselement vorgesehen, welches beispielsweise rechenartig ausgeführt ist, wie dies in der Figur 6 mit unterbrochenen Linien bei 32 angedeutet ist.

Die Erfindung wurde vorangehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

So wurde vorstehend im Zusammenhang mit den Figuren 1 - 6 davon ausgegangen, dass die jeweilige Entnahmeeinheit 12 bzw. 12a in vertikaler Richtung bewegt wird. Selbstverständlich ist auch eine Bewegung der jeweiligen Entnahmeeinheit 12 bzw. 12a in einer anderen Achsrichtung oder aber zusätzlich in wenigstens einer anderen Achsrichtung möglich. Weiterhin ist es möglich, den jeweiligen Bunker 11 bzw. 11a mit dem in diesen Bunker enthaltenen Vorrat an Stanzmuttern 1 relativ zu dem Entnahmeelement 12 bzw. 12a oder deren Einlass 13 bzw. 29 in wenigstens einer Achsrichtung zu bewegen.

Weiterhin ist es auch möglich, durch entsprechende Maßnahmen, beilspielsweise durch eine mechanische Einrichtung und/oder durch Blas- oder Druckluft die Stanzmuttern 1 im Bunker 11 bzw. 11a in Bewegung zu bringen oder zu halten, um so an dem betreffenden Einlass 13 bzw. 29 stets eine genügende Menge an zufällig richtig orientierten Stanzmuttern 1 zu erhalten, die dann über den Einlass 13 bzw. über die Öffnungen 29 in die Entnahmeeinrichtung 12 bzw. 12a gelangen.

### Bezugszeichenliste

- 1: Stanzmutter
- 2: Werkstück aus Blech
- 3: Stanzmutterkörper
- 4: Gewindebohrung
- 5: Vorsprung
- 10, 10a: Versorgungseinheit
- 11, 11a: Bunker
- 12, 12a: Entnahmeelement oder Entnahmeeinheit
- 13: Einlass
- 13.1: Öffnung
- 14: Sortiereinheit
- 15: Magazin
- 16: Wendeeinheit
- 1 7: Auslasskanal
- 18: Versorgungsschlauch
- 19: Schacht
- 19.1, 19.2: trichterförmig sich verengender Schachtabschnitt
- 20: Wandung
- 20.1: abgeschrägter Bereich der Innenfläche der Wandung 20
- 21: Kanal
- 22: Sortierkanal
- 22.1, 22.2, 22.3: Kanalabschnitt
- 22.4: Verzweigungsbereich
- 23: Kanal
- 24: Gehäuse
- 25: Kanal
- 26: Wendekanal
- 27,28: Erweiterung
- 29: Einlass
- 29.1: Öffnung oder Maske
- 30: Schacht
- 31: Kanal
- 32: Einrichtung zum Auflockern und Entfernen von Stanzmuttern
- Doppelpfeil A: Bewegungshub des Förderelements 15

## Patentansprüche

1. Versorgungseinheit zum Zuführen oder Bereitstellen von Bauelementen, z.B. von Stanzmuttern (1) oder dergleichen Verbindungselementen, mit einem einen Stauraum bildenden Bunker (11, 11a) zur Aufnahme eines Vorrats an Bauelementen (1) in einer ungeordneten Menge, mit einer Entnahmeelement (12, 12a) zum Entnehmen der Bauelemente (1) aus dem Stauraum und zur orientierten Weiterleitung der Bauelemente (1), mit einem Antrieb zur Erzeugung einer Relativbewegung zwischen dem Entnahmeelement (12, 12a) und dem Bunker (11, 11a) in wenigstens einer Achsrichtung, mit wenigstens einem Kanal (21, 31) zum Wegführen der aus dem Stauraum entnommenen und wenigstens eine vorgegebene Orientierung aufweitenden Bauelemente (1), und mit Mitteln zur Erzeugung einer Bewegung der Bauelemente (1) im Stauraum, **dadurch gekennzeichnet, dass** das Entnahmeelement (12, 12a) den wenigstens einen über zumindest einen Einlass (13) in den Stauraum mündenden Kanal (21, 31) aufweist, und dass der Einlass (13, 29) und/oder der Kanal (21, 3) im Querschnitt an die Außenkontur der Bauelemente (1) derart angepasst sind, dass nur solche am Einlass (13, 29) anstehende Bauelemente (1), die die wenigstens eine vorgegebene Orientierung aufweisen, über den Einlass (13, 29) in den Kanal (21, 31) gelangen und dort unter Beibehaltung der Orientierung weitergefördert werden.

2. Versorgungseinheit nach Anspruch 1, **dadurch gekennzeichnet, dass** der Einlass (13) des Entnahmeelementes (12, 12a) von wenigstens einem Schacht (19, 30) gebildet ist, der über eine Entnahmeöffnung zum Stauraum des Bunkers (11, 11a) offen ist und in den wenigstens einen Kanal (21, 31) mündet, und zwar bevorzugt über einen sich trichterartig verengenden Schachtabschnitt (19.1, 19.2).

3. Versorgungseinheit nach Anspruch 1 oder 2, **dadurch gekennzeichnet, dass** der Einlass des Entnahmeelementes (12, 12a) von einer Öffnung gebildet ist, die mit ihrem Öffnungsquerschnitt horizontal oder nahezu horizontal orientiert ist.

4. Versorgungseinheit nach einem der vorhergehenden Ansprüche, **dadurch gekennzeichnet, dass** das Entnahmeelement bzw. dessen Einlass (29, 30) derart ausgebindet sind, dass nur Bauelemente (1), die eine einzige Orientierung aufweisen durch eine an die Außenkontur der Bauelemente angepasste Öffnung (29) in das Entnahmeelement (12a) gelangten.

5. Versorgungseinheit nach einem der vorhergehenden Ansprüche, **dadurch gekennzeichnet, dass** die Mittel zur Erzeugung der Bewegung der Bauelemente (1) im Stauraum von dem durch den Antrieb bewegbaren Entnahmeelement (12, 12a) und/oder von dem durch den Antrieb bewegbaren Bunker (11, 11a) und/oder von wenigstens einer Austrittdüse für Druck- oder Blasluft und/oder von wenigstens einem mechanisch bewegten Element, beispielsweise von wenigstens einem mechanisch durch den Stauraum bewegten Element gebildet sind.

6. Versorgungseinheit nach einem der vorhergehenden Ansprüche, **dadurch gekennzeichnet, dass** sich der Kanal (21, 31) des Entnahmeelementes (12, 12a) über wenigstens eine Teillänge in vertikaler Richtung erstreckt, und dass das Fördern der Bauelemente (1) in diesem Teilabschnitt durch Schwerkraft erfolgt.

7. Versorgungseinheit nach einem der vorhergehenden Ansprüche, **dadurch gekennzeichnet, dass** das Entnahmeelement (12) bzw. dessen Einlass (13) derart ausgebildet sind, dass nur Bauelemente (1), die eine erste oder eine zweite von zwei zulässigen Orientierungen aufweisen, über den Einlass (13) in den wenigstens einen Kanal (21) der Entnahmeelement (2) gelangen.

8. Versorgungseinheit nach einem der vorhergehenden Ansprüche, **gekennzeichnet durch** eine in Transporlricittung der Bauelemente (1) an das Entnahmeelement (12) anschließende Sortiereinheit (14), mit wenigstens einem Bauclenienteinlass (22.1), welchem die Bauelements (1) in wenigstens einer von mehreren zulässigen Orientierungen zugeführt werden, und mit wenigstens zwei Bauelementauslässen (22.2, 22.3), an denen die Bauelemente (1) jeweils in einer, aber von Bauelementauslass zu Bauelementauslass unterschiedlichen Orientierung für die Weiterverwendung bereitgestellt werden.

9. Versorgungseinheit nach Anspruch 8, **dadurch gekennzeichnet, dass** die Sortiereinheit wenigstens einen Sortierkanal (22) mit einem ersten, einen Bauelementeinlass bildenden Kanalabschnitt (22.1) aufweist, dessen Querschnitt passend für die Außenkontur solcher Bauelemente (1) ist, die wenigstens eine von wenigstens zwei möglichen Orientierungen aufweisen und der sich an wenigstens einem Verzweigungsbereich (22.4) in wenigstens zwei weitere verzweigte Kanalabschnitte (22.2, 22.3) verzweigt, von denen jeder im Querschnitt an die Außenkontur der Bauelemente (1) derart angepasst ist, dass in jeden verzweigten Kanalabschnitt (22.2, 22.3) nur Bauelemente (1) gelangten, die hinsichtlich ihrer Orientierung dem Querschnitt des verzweigten Kanalabschnitts (22.2, 22.3) entsprechen.,
wobei die an den wenigstens einen Verzweigungsbereich (22.4) anschließenden verzweigten Kanalabschnitte (22.2, 22.3) beispielsweise unterschiedliche Querschnitte aufweisen.

10. Versorgungseinheit nach Anspruch 9, **dadurch gekennzeichnet, dass** der Querschnitt des ersten Kanalabschnitts (22.1) passend für die Außenkontur von Bauelementen (1) ist, die eine erste oder eine zweite, von zwei möglichen Orientierungen aufweisen, und dass die an den wenigstens einen Verzweigungsbereich (22.4) anschließenden verzweigten Kanalabschnitte (22.2, 22.3) hinsichtlich ihres Querschnitts jeweils passend für Bauelemente nur der ersten oder zweiten Orientierung ausgebildet sind.

11. Versorgungseinheit nach Anspruch 9 oder 10, **dadurch gekennzeichnet, dass** bei Verwendung von Bauelementen, deren Außenkontur von wenigstens einer Extremität (5) an einer Bauelement-Außenfläche geprägt ist, der erste Kanalabschnitt (22.1) einen Querschnitt besitzt, der dem Bauelementkörper (3) ohne die Extremität (5) entspricht und der zusätlich für die zulässiger Orientierungen der Bauelemente (1) an wenigstens zwei Querschnittsseiten eine man die Extremität (5) angepasste Erweiterung (27, 28) aufweist, und dass sich jede Erweiterung (27, 28) am Verzweigungsbereich (22.4) nur jeweils in einen der verzweigten Kanalabschnitte (22.2, 22.3) des Sortierkanals (22) fortsetzt.

12. Versorgungseinheit nach Anspruch 11, **dadurch gekennzeichnet, dass** für Bauelemente (1), die an einer Außenfläche eines Bauelementkörpers (3) einen Vorsprung (5) aufweisen, die Querschniuserweiterungen Nuten (27, 28) sind.

13. Versorgungseinheit nach einem der vorhergehenden Ansprüche, **dadurch gekennzeichnet, dass** der Querschnitt des Sortierkanals (22) im Wesentlichen rechteckförmig mit den Erweiterungen im ersten Kanalabschnit sowie in den verzweigten Kanalabschnitten (22.2, 22.3) ausgebildet ist.

14. Versorgungseinheit nach einem der vorhergehenden Ansprüche, **dadurch gekennzeichnet, dass** sich an einen der verzweigten Kanalabschnitte (22.2, 22.3) eine Wendeeinrichtung, beispielsweise ein Wendekanal (26) anschließt.

15. Versorgungseinheit nach einem der vorhergehenden Ansprüche, **dadurch gekennzeichnet, dass** der wenigstens eine Sortierkanal (22) im Wesentlichen so orientiert ist, dass die Bauelemente durch diesen Kanal bzw. dessen Kanalabschnitte durch Scherkraft bewegt werden.

16. Versorgungseinheit nach einem der vorhergehenden Ansprüche, **gekennzeichnet durch** Mittel zum Bewegen der Bauelemente **durch** den wenigstens einen Sortierkanal (22).

## Claims

1. Supply unit for feeding or providing component parts, e.g. pierce nuts (1) or similar types of connecting elements, comprising a hopper (11, 11a) forming a storage chamber for receiving a supply of component parts (1) in an unclassified quantity, with a removal element (12, 12a) for removing the component parts (1) from the storage chamber and forwarding the component parts (1) in an orientated direction, with a drive for generating a relative movement between the removal element (12, 12a) and the hopper (11, 11a) in at least one axial direction, with at least one channel (21, 31) for leading away the component parts (1) which are removed from the storage chamber and which have at least one predetermined orientation, and with means for generating a movement of the component parts (1) in the storage chamber, **characterised in that** the removal element (12, 12a) has the at least one channel (21, 31) which opens into the storage chamber via at least one inlet (13), and that the inlet (13, 29) and/or the channel (21, 31) are adapted as regards their cross-sectional area to the external contour of the component parts (1) so that only those component parts (1) accumulating at the inlet (13, 29) and which have the at least one predetermined orientation, pass over the inlet (13, 29) into the channel (21, 31) and are forwarded there whilst retaining their orientation.

2. Supply unit according to claim 1 **characterised in that** the inlet (13) of the removal element (12, 12a) is formed by at least one chute (19, 30) which is open by way of a removal opening to the storage chamber of the hopper (11, 11a) and which opens into the at least one channel (21, 31), namely preferably by way of a tapering funnel-type chute section (19.1, 19.2).

3. Supply unit according to claim 1 or 2 **characterised in that** the inlet of the removal element (12, 12a) is formed by an opening which is aligned horizontally or practically horizontally with its opening cross-section.

4. Supply unit according to one of the preceding claims **characterised in that** the removal element or its inlet (29, 30) are formed so that only component parts (1) which have a single orientation pass into the removal element (12a) through an opening (29) which conforms with the external contour of the component parts.

5. Supply unit according to one of the preceding claims **characterised in that** the means for generating the movement of the component parts (1) in the storage chamber are formed by the removal element (12, 12a) which is movable by means of the drive and/or are formed by the hopper (11, 11a) which is movable by means of the drive and/or are formed by at least one outlet nozzle for compressed or blow air and/or by at least one mechanically moved element, by way of example by at least one element moved mechanically through the storage chamber.

6. Supply unit according to one of the preceding claims **characterised in that** the channel (21, 31) of the removal element (12, 12a) extends in a vertical direction over at least part of its length, and that the conveyance of the component parts (1) takes place through gravity in this section.

7. Supply unit according to one of the preceding claims **characterised in that** the removal element (12) or its inlet (13) are designed so that only component parts (1) which have a first or a second of two permissible orientations pass via the inlet (13) into the at least one channel (21) of the removal element (12).

8. Supply unit according to one of the preceding claims **characterised by** a sorting unit (14) which adjoins the removal element (12) in the transport direction of the component parts (1), with at least one component part inlet (22.1) to which the component parts (1) are supplied in at least one of several permissible orientations, and with at least two component part outlets (22.2, 22.3) at which the component parts (1) are each set up for further use in an orientation which is however different from outlet to outlet.

9. Supply unit according to claim 8 **characterised in that** the sorting unit has at least one sorting channel (22) with a first channel section (22.1) which forms a component part inlet and whose cross-sectional area fits the external contour of those component parts (1) which have at least one of at least two possible orientations, and which branches at at least one branch area (22.4) into at least two further channel section branchlines (22.2, 22.3) of which each is adapted in cross-sectional area to the external contour of the component parts (1) so that only component parts (1) which as regards their orientation correspond to the cross-sectional area of the channel section branchline (22.2, 22.3) pass into each channel section branchline (22.2, 22.3), wherein the channel section branchlines (22.2, 22.3) adjoining the at least one branch area (22.4) have by way of example different cross-sectional areas.

10. Supply unit according to claim 9 **characterised in that** the cross-sectional area of the first channel section (22.1) is suitable for the external contour of the component parts (1) which have a first or a second of two possible orientations, and that the channel section branchlines (22.2, 22.3) adjoining the at least one branch area (22.4) are each designed as regards their cross-section to fit component parts only of the first or second orientation.

11. Supply unit according to claim 9 or 10 **characterised in that** when using component parts whose external contour is stamped by at least one extremity (5) on a component part external surface, the first channel section (22.1) has a cross-sectional area which corresponds to the component part body (3) without the extremity (5) and which has additionally for the permissible orientations of the component parts (1) on at least two cross-sectional sides an expansion (27, 28) which is adapted to the extremity (5), and that each expansion (27, 28) at the branch area (22.4) is continued only into one each of the channel section branchlines (22.2, 22.3) of the sorting channel (22).

12. Supply unit according to claim 11 **characterised in that** for component parts (1) which have a projection (5) on an external surface of a component part body (3) the cross-sectional expansions are grooves (27, 28).

13. Supply unit according to one of the preceding claims **characterised in that** the cross-section of the sorting channel (22) is designed substantially rectangular with the expansions in the first channel section as well as in the channel section branchlines (22.2, 22.3).

14. Supply unit according to one of the preceding claims **characterised in that** a turning device, by way of example a turning channel (26), adjoins one of the channel section branchlines (22.2, 22.3).

15. Supply unit according to one of the preceding claims **characterised in that** the at least one sorting channel (22) is substantially aligned so that the component parts are moved by gravity through this channel or its channel sections.

16. Supply unit according to one of the preceding claims **characterised by** means for moving the component parts through the at least one sorting channel (22).

## Revendications

1. Dispositif d'alimentation destiné à acheminer ou à mettre en oeuvre des composants, par exemple des écrous estampés (1) ou des éléments d'assemblage analogues, avec un réservoir (11, 11a) formant un espace d'accumulation destiné à recevoir un stock de composants (1) en une quantité désordonnée, avec un élément de prélèvement (12, 12a) destiné à prélever des composants (1) hors de l'espace d'accumulation et à transférer les composants (1) de façon orientée, avec un entraînement destiné à produire un mouvement relatif entre l'élément de prélèvement (12, 12a) et le réservoir (11, 11a) dans au moins une direction axiale, avec au moins un canal (21, 31) destiné à évacuer les composants prélevés hors de l'espace d'accumulation et présentant au moins une orientation prédéterminée, et avec des moyens pour produire un mouvement des composants (1) dans l'espace d'accumulation, **caractérisé en ce que** l'élément de prélèvement (12, 12a) présente l'au moins un canal (21, 31) débouchant dans l'espace d'accumulation par au moins une entrée (13), et **en ce que** l'entrée (13, 29) et/ou le canal (21, 31) présente une section transversale adaptée au contour extérieur des composants (1), de telle manière que seuls les composants se présentant à l'entrée (13, 29), qui présentent l'au moins une orientation prédéterminée, parviennent dans le canal (21, 31) via l'entrée (13, 29) et y soient transférés en conservant leur orientation.

2. Dispositif d'alimentation selon la revendication 1, **caractérisé en ce que** l'entrée (13) de l'élément de prélèvement (12, 12a) est formée par au moins un puits (19, 30), qui est ouvert en direction de l'espace d'accumulation du réservoir (11, 11a) par une ouverture de prélèvement et qui débouche dans l'au moins un canal (21, 31), notamment de préférence au moyen d'une section de puits (19.1, 19.2) se rétrécissant en forme d'entonnoir.

3. Dispositif d'alimentation selon la revendication 1 ou 2, **caractérisé en ce que** l'entrée de l'élément de prélèvement (12, 12a) est formée par une ouverture, dont la section transversale de l'ouverture est orientée horizontalement ou à peu près horizontalement.

4. Dispositif d'alimentation selon l'une quelconque des revendications précédentes, **caractérisé en ce que** l'élément de prélèvement ou son entrée (29, 30) est réalisé(e) de telle manière que seuls des composants (1), qui présentent une seule orientation, parviennent dans l'élément de prélèvement (12a) via une ouverture (29) adaptée au contour extérieur des composants.

5. Dispositif d'alimentation selon l'une quelconque des revendications précédentes, **caractérisé en ce que** les moyens pour produire le mouvement des composants (1) dans l'espace d'accumulation sont formés par l'élément de prélèvement (12, 12a) pouvant être déplacé par l'entraînement et/ou par le réservoir (11, 11a) pouvant être déplacé par l'entraînement et/ou par au moins une buse de sortie pour de l'air comprimé ou de soufflage et/ou par au moins un élément déplacé mécaniquement, par exemple par au moins un élément déplacé mécaniquement à travers l'espace d'accumulation.

6. Dispositif d'alimentation selon l'une quelconque des revendications précédentes, **caractérisé en ce que** le canal (21, 31) de l'élément de prélèvement (12, 12a) s'étend sur au moins une partie de sa longueur en direction verticale, et **en ce que** le transport des composants (1) dans cette section partielle est effectué par gravité.

7. Dispositif d'alimentation selon l'une quelconque des revendications précédentes, **caractérisé en ce que** l'élément de prélèvement (12) ou son entrée (13) est réalisé(e) de telle manière que seuls les composants (1), qui présentent une première ou une seconde de deux orientations admissibles, parviennent par l'entrée (13) dans l'au moins un canal (21) de l'élément de prélèvement (12).

8. Dispositif d'alimentation selon l'une quelconque des revendications précédentes, **caractérisé par** une unité de tri (14) se raccordant à l'élément de prélèvement (12) dans la direction de transport des composants (1), avec au moins une entrée de composants (22.1) à laquelle les composants (1) sont acheminés dans au moins une de plusieurs orientations admissibles, et avec au moins deux sorties de composants (22.2, 22.3), dans lesquelles les composants sont présentés dans une orientation, différente d'une sortie de composants à l'autre, pour leur mise en oeuvre ultérieure.

9. Dispositif d'alimentation selon la revendication 8, **caractérisé en ce que** l'unité de tri présente au moins un canal de tri (22) avec une première section de canal (22.1) formant une entrée de composants, dont la section transversale est adaptée au contour extérieur des composants (1) qui présentent au moins une de deux orientations possibles, et qui se ramifie dans au moins une région de ramification (22.4) en au moins deux autres sections de canal ramifiées (22.2, 22.3), dont chacune a une section transversale adaptée au contour extérieur des composants (1), de telle manière que seuls parviennent dans chaque section de canal ramifiée (22.2, 22.3) les composants (1) qui, par leur orientation, correspondent à la section transversale de la section de canal ramifiée (22.2, 22.3), dans lequel les sections de canal ramifiées (22.2, 22.3) se raccordant à l'au moins une région de ramification (22.4) présentent par exemple des sections transversales différentes.

10. Dispositif d'alimentation selon la revendication 9, **caractérisé en ce que** la section transversale de la première section de canal (22.1) est adaptée au contour extérieur de composants (1), qui présentent une première ou une seconde de deux orientations possibles, et **en ce que** les sections de canal ramifiées (22.2, 22.3) se raccordant à l'au moins une région de ramification (22.4) présentent une section transversale convenant respectivement pour des composants présentant la première ou la seconde orientation.

11. Dispositif d'alimentation selon la revendication 9 ou 10, **caractérisé en ce que**, lors de l'utilisation de composants dont le contour extérieur d'au moins une extrémité (5) est estampé sur une face extérieure du composant, la première section de canal (22.1) possède une section transversale qui correspond au corps de composant (3) sans l'extrémité (5) et qui présente en plus un élargissement (27, 28) adapté à l'extrémité (5) sur au moins deux côtés de la section transversale pour les orientations admissibles des composants (1), et **en ce que** chaque élargissement (27, 28) ne se prolonge à la région de ramification (22.4) respectivement que dans une des sections de canal ramifiées (22.2, 22.3) du canal de tri (22).

12. Dispositif d'alimentation selon la revendication 11, **caractérisé en ce que**, pour des composants (1) qui présentent une saillie (5) sur une face extérieure du corps de composant (3), les élargissements de section transversale sont des rainures (27, 28).

13. Dispositif d'alimentation selon l'une quelconque des revendications précédentes, **caractérisé en ce que** la section transversale du canal de tri (22) est réalisée sous forme essentiellement rectangulaire avec les élargissements dans la première section de canal ainsi que dans les sections de canal ramifiées (22.2, 22.3).

14. Dispositif d'alimentation selon l'une quelconque des revendications précédentes, **caractérisé en ce qu'**un dispositif de retournement, par exemple un canal de retournement (26) se raccorde à une des sections de canal ramifiées (22.2, 22.3).

15. Dispositif d'alimentation selon l'une quelconque des revendications précédentes, **caractérisé en ce que** l'au moins un canal de tri (22) est orienté essentiellement de telle manière que les composants soient déplacés à travers ce canal ou ses sections de canal par gravité.

16. Dispositif d'alimentation selon l'une quelconque des revendications précédentes, **caractérisé par** des moyens pour déplacer les composants à travers l'au moins un canal de tri (22).
